(19) Europäisches Patentamt
European Patent Office
Office européen des brevets

(11) EP 0 681 433 B1

(12) **EUROPEAN PATENT SPECIFICATION**

(45) Date of publication and mention of the grant of the patent:
**04.09.1996 Bulletin 1996/36**

(21) Application number: **94905033.0**

(22) Date of filing: **11.01.1994**

(51) Int. Cl.$^6$: **A23D 7/00**, A21D 13/08

(86) International application number:
**PCT/EP94/00066**

(87) International publication number:
**WO 94/16572 (04.08.1994 Gazette 1994/18)**

# (54) NATURAL PUFF-PASTRY MARGARINES

NATÜRLICHE BLÄTTERTEIGMARGARINEN

MARGARINES NATURELLES POUR LA PATE FEUILLETEE

(84) Designated Contracting States:
**AT BE CH DE DK ES FR GB GR IE IT LI NL PT SE**

(30) Priority: **28.01.1993 EP 93200219**

(43) Date of publication of application:
**15.11.1995 Bulletin 1995/46**

(73) Proprietors:
- **UNILEVER PLC**
  **London EC4P 4BQ (GB)**
  Designated Contracting States:
  **GB IE**
- **UNILEVER N.V.**
  **3013 AL Rotterdam (NL)**
  Designated Contracting States:
  **BE CH DE DK ES FR GR IT LI NL PT SE AT**

(72) Inventor: **LANSBERGEN, Gabriel Jacobus T.**
**NL-2692 CN 's-Gravenzande (NL)**

(74) Representative: **Sikken, Antonius H. J. M. et al**
**UNILEVER N.V.,**
**Patent Division,**
**P.O. Box 137**
**3130 AC Vlaardingen (NL)**

(56) References cited:
**EP-A- 0 078 568** **EP-A- 0 206 674**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Rank Xerox (UK) Business Services
2.13.4/3.4

## Description

Puff-pastry margarines have to meet specific requirements in terms of hardness at the working temperature (= temperature at which they are applied) and solid fat content (N-values, measured according to an NMR pulse method after specific pre-treatment of the fat). As the margarines are applied in combination with a dough and a lamination process has to be carried out on the combined dough/margarine product, the C-values at the working temperature may not be too high since this would result in damaging the dough layer; on the other hand, the fat may not be too soft because this would result in undesired spreading of the fat, removing most of it from the system.

Therefore, the C-values of puff-pastry margarines at the working temperature should be 1200-2000. Depending on the climate of the country where the product is made, the working temperatures are normally within the range of 5-30°C.

C-values are measured according to the technique desclosed in J. Amer. Oil Chem. Soc. 36 (1959), 345-348, using a cone penetronometer.

In order to achieve a right consistency, the fats applied should have a particular solid fat content measured according to the NMR pulse method disclosed in Fette, Seifen, Anstrichmittel 80 (1978), 180-186. This solid fat content (indicated by N) is measured after a particular pre-treatment of the fat. This pre-treatment consists of the following steps : melting at 60°C; 1 hr at 0°C and 30 min at measurement temperature (= UMA-1).

In our Australian Patent N° 587,435 margarines and shortenings have been disclosed that are suitable for puff pastry purposes and wherein the fat component always contains a lauric fat or a hardened component. As hardening inevitably leads to the presence of trans-acids in the fats, the compositions will contain some trans-acids and are therefore not completely natural. Since there is a trend towards more natural products, we have performed a study in order to find out whether puff pastry margarines could be made that do not contain hardened fats (so, no trans-acids) but that still meet the required conditions for C-value and N-value. In fact, it can be concluded, e.g., from Table I from the above-mentioned Australian patent, that the prior art products according to this patent have C-values (after 15 minutes at 15°C) of 1000-8000 g/cm$^2$, while its $N_{15}$ values range from 27.5-35.0 wt.%.

The presence of lauric fats has the disadvantage of entailing shorter shelf-lives because of hydrolysis occurring upon storage.

The studies referred to above have resulted in our invention, which therefore concerns puff-pastry margarines comprising a fat-continuous emulsion having a fat content of at least 60 wt.%, preferably of at least 80 wt.%, wherein the fat comprises the following triglycerides :

| | |
|---|---|
| $H_3$ = | 3-30 wt.% calculated on the fat, preferably 5-25 wt.%; |
| $H_2U$ = | 25-60 wt.% calculated on the fat, preferably 35-55 wt.%; |
| $HU_2 + U_3$ = | < 65 wt.% calculated on the fat, preferably 10-65, in particular 30-50 wt.%, in which |

H = saturated fatty acid $C_{16}$-$C_{22}$;
U = mono- or polyunsaturated fatty acid $C_{18}$-$C_{22}$;

which emulsion, at working temperatures between 5 and 30°C, displays a hardness C of 1200 to 2000, while at the same time the solid fat index N (UMA-1) of the fat is such that at least at a pre-selected working temperature

$$\frac{C}{N^2} \geq 1.5,$$

preferably

$$\frac{C}{N^2} = 1.5\text{-}2.5.$$

The above-mentioned fats are free of trans-acids, meaning that the content of $H_2E$-triglycerides is less than 4 wt.%, preferably less than 1.0 wt.% (H as above, E = elaidic acid). Moreover, the fats are free of lauric fats.

Although margarines (= print margarines) are known that have a

$$\frac{C}{N^2} = 1.8$$

(see our Dutch patent application N° 8205047), these margarines are fully based on hardened fats with relatively low C-values (250-400 g/cm$^2$).

On the basis of the data laid down in Table I of our Australian patent N° 587,435,

$$\frac{C}{N^2}\text{-values}$$

can be calculated that are in the range of 1.3-6.7. However, it should be noted that :

1. the above-mentioned figures do account for fats containing trans-acids or laurics;
2. C-values above 2,000 are unacceptable for puff pastries;
3. the data for hardness C were obtained in products that were not yet completely homogeneous so that the C-values are not quite comparable with our C-values.

Fats very suitable for our puff-pastry margarines are preferably chosen from the group consisting of palm oil, or palm oil fractions, in particular palm oil stearin, palm oil mid-fractions or mixtures thereof. In order to obtain the desired consistency, it is preferred that some liquid oil, in particular soybean oil, be present in our fat composition. Very suitable fat compositions comprise :

| | |
|---|---|
| 20-35 wt.% | of a palm oil stearin; |
| 15-25 wt.% | of a palm oil mid-fraction; |
| 10-35 wt.% | of a palm oil; |
| 0-40 wt.% | of a liquid oil (preferably soybean oil). |

The N-lines (UMA-1) of the different palm fat components are preferably :

| | |
|---|---|
| Palm oil stearin : | $N_{10}$ = 60-85 |
| | $N_{20}$ = 45-70 |
| | $N_{30}$ = 25-50 |
| | $N_{35}$ = 15-40 |
| Palm oil mid-fraction : | $N_{10}$ = 60-95 |
| | $N_{20}$ = 25-85 |
| | $N_{30}$ = 0.2-15 |
| | $N_{35}$ = 0-4 |
| Palm oil : | $N_{20}$ = 10-30 |
| | $N_{30}$ = 2-12 |
| | $N_{35}$ = < 7 |

It is, however, preferred to apply a fat or a fat mixture that displays an N-value at working temperature below 38. As the C-value ranges from 1200 to 2000, it will be obvious that a fat having e.g. an $N_{20}$ = 43 can only be applied at a higher working temperature (i.e. above 20°C in this case), where its N-values are lower, in order to meet the requirement of

$$\frac{C}{N^2} > 1.5.$$

The above-mentioned fat emulsions can be applied with good results in puff pastries; therefore, puff pastries wherein the fat component consists at least partly of the margarine according to the invention are also part of the invention. Application of the above-mentioned margarines can lead to puff pastries with a gravity index of 1.0-1.4 (gravity index is defined as height of patty (mm) : weight of patty (g)).

The margarines can be made according to known margarine processing techniques. This means that, e.g., one of the following Votator sequences could be applied : AAB or AACB or AACAB. In case sequence AAB is applied sieve-plates must be present, in order to make a homogeneous product. Dosing rates of 50-100 kg/h were applied at pilot plant scale, while the coolant temperatures applied in the A-units were 0 to -25°C.

EXAMPLES

Four fat blends were made with the composition according to Table I

TABLE I

| Blend | PO-s (wt.%) | PO-m (wt.%) | PO (wt.%) | BO (wt.%) | $N_{10}$ | $N_{20}$ | $N_{30}$ | $N_{35}$ |
|---|---|---|---|---|---|---|---|---|
| 1 | 25 | 20 | 45 | 10 | 62 | 42 | 20 | 14 |
| 2 | 25 | 20 | 35 | 20 | 55 | 36 | 17 | 13 |
| 3 | 30 | 20 | 15 | 35 | 48 | 31 | 16 | 12 |
| 4 | 30 | 20 | 25 | 25 | 54 | 37 | 15 | 11 |

The N-lines of the different components were as follows :

Palm oil stearin : $N_{10} = 78$
$N_{20} = 66$
$N_{30} = 47$
$N_{35} = 38$

Palm oil mid-fraction : $N_{10} = 92$
$N_{20} = 79$
$N_{30} = 11$
$N_{35} = 3$

Palm oil : $N_{20} = 25$
$N_{30} = 9$
$N_{35} = 5$

The triglyceride composition of these components is given in Table II.

TABLE II

| | $H_3$ | $H_2U$ | $HU_2$ |
|---|---|---|---|
| Palm oil stearin | 33 | 44 | 14 |
| Palm oil mid-fraction | 3 | 89 | 6 |
| Palm oil | 8 | 45 | 28 |

The N-values of the 4 blends are mentioned in Table I.

For the preparation of an 80% fat emulsion the Votator sequence AAB was applied. C-values were measured at 15, 20 and 25 °C.

This resulted in the following data (Table III).

| Blend | $C_{15}$ | $C_{20}$ | $C_{25}$ | $N_{15}$ | $N_{20}$ | $N_{25}$ | $C/N^2$ at: | | |
|---|---|---|---|---|---|---|---|---|---|
| | | | | | | | 15°C | 20°C | 25°C |
| 1 | 4200 | 2750 | 1400 | 52 | 42 | 31 | 1.6 | 1.6 | 1.5 |
| 2 | 3200 | 1900 | 1100 | 45 | 36 | 27 | 1.6 | 1.5 | 1.5 |
| 3 | 2650 | 1550 | 850 | 40 | 31 | 24 | 1.7 | 1.6 | 1.5 |
| 4 | 4100 | 2350 | 1200 | 47 | 37 | 28 | 1.9 | 1.7 | 1.5 |

The above-mentioned four blends were used in the preparation of puff pastries. The following process was followed therefor.

Recipe:

Premix:

| | |
|---|---|
| Patent flour: | 1000 g |
| Puff pastry margarine: | 200 g |
| Water: | 520 g |

The puff-pastry margarine was tempered before use during 12 hrs at working temperature.

The dough was prepared in a Diosna Kneading Machine. 1600 g of the dough were leavened, and rested during 10 min. The dough was applied at working temperature. The dough was cut in the usual way and 800 g of the puff-pastry margarine was added. The system was subjected to 6 half turns in three. After every 2 turns the dough was rested for 45 min. Positions of the laminating machine were: 25-20-15-12-10. The dough was laminated using these positions: after 1/4 turn lamination proceeded at 12-8-6; after another 1/4 turn the lamination proceeded at 5-4-3 3/4. The patties were cut. After 1 hr rest the patties were baked at 240°C for 20 min.

This resulted in patties with the following properties (see Table IV) :

TABLE IV

| Trial no. IT26P.. | Application temperature | PATTY | | |
|---|---|---|---|---|
| | | height | weight | GI |
| 1 | 25°C | 36.6 | 28.2 | 1.3 |
| | 20°C | 39.1 | 32.7 | 1.19 |
| 2 | 20°C | 42.3 | 33.9 | 1.25 |
| 3 | 20°C | 40.4 | 34.1 | 1.18 |
| 4 | 20°C | 33.4 | 31.7 | 1.05 |
| | 25°C | | | 1.18 |

**Claims**

**1.** Puff-pastry margarine comprising a fat-continuous emulsion having a fat content of at least 60 wt.%, wherein the fat comprises the following triglycerides :

$H_3$ = 3-30 wt.% calculated on the fat, preferably 5-25 wt%;
$H_2U$ = 25-60 wt.% calculated on the fat, preferably 35-55 wt.%;
$HU_2 + U_3$ = < 65 wt.% calculated on the fat, preferably 30-50 wt.%, $H_2E$, less than 4 wt%, while the fat is free of lauric-fats, in which

H = saturated fatty acid $C_{16}$-$C_{22}$;
U = mono- or polyunsaturated fatty acid $C_{18}$-$C_{22}$;
E = elaidic acid

which emulsion, at working temperatures between 5 and 30°C, displays a hardness C of 1200 to 2000, while at the same time the solid fat index (UMA-1) of the fat is such that at least at a preselected working temperature

$$\frac{C}{N^2} \geq 1.5.$$

2. Puff-pastry margarine according to Claim 1, wherein C and N of the emulsion are such that $\frac{C}{N2}$ at the working temperature is 1.5-2.5.

3. Puff-pastry margarine according to Claim 1, or 2, wherein the fat contains less than 1 wt.% of $H_2E$ fats.

4. Puff-pastry margarine according to Claims 1-3, wherein the fat content is at least 80 wt.%.

5. Puff-pastry margarine according to Claims 1-4, wherein the fat is chosen from the group consisting of palm oil, or palm oil fractions, in particular palm oil stearin, palm oil mid-fraction or mixtures thereof.

6. Puff-pastry margarine according to Claims 1-5, wherein the fat phase consists of 20-35 wt.% of palm oil stearin, 15-25 wt.% of palm oil mid-fraction, 10-55 wt.% of palm oil and 0-40 wt.% of a liquid oil.

7. Puff-pastry margarine according to Claims 1-6, wherein the solid fat content (UMA-1) of the fat at working temperature is less than 38.

8. Puff pastries containing as fat component the puff-pastry margarines of Claims 1-7.

9. Puff pastries according to Claim 8, wherein the gravity index of the puff pastries is 1.0-1.4.

**Patentansprüche**

1. Blätterteigmargarine, umfassend eine fettkontinuierliche Emulsion, die einen Fettgehalt von mindestens 60 Gew.-% aufweist, worin das Fett die folgenden Triglyceride umfaßt:

| | |
|---|---|
| $H_3$ = | 3 bis 30 Gew.-%, berechnet auf das Fett, vorzugsweise 5 bis 25 Gew.-%, |
| $H_2U$ = | 25 bis 60 Gew.-%, berechnet auf das Fett, vorzugsweise 35 bis 55 Gew.-%, |
| $HU_2 + U_3$ = | < 65 Gew.-%, berechnet auf das Fett, vorzugsweise 30 bis 50 Gew.-%, |
| $H_2E$ | weniger als 4 Gew.-%, wobei das Fett frei von Lauric-Fetten ist, worin |

H = gesättigte $C_{16}$-$C_{22}$-Fettsäure,
U = einfach oder mehrfach ungesättigte $C_{18}$-$C_{22}$-Fettsäure,
E = Elaidinsäure,

welche Emulsion bei Verarbeitungstemperaturen zwischen 5 und 30°C eine Härte C von 1200 bis 2000 zeigt, während gleichzeitig der Festfettindex (UMA-1) des Fettes so bemessen ist, daß zumindest bei der vorher gewählten Verarbeitungstemperatur

$$\frac{C}{N^2} \geq 1,5$$

ist.

2. Blätterteigmargarine nach Anspruch 1, in der die C- und N-Werte der Emulsion so bemessen sind, daß

$$\frac{C}{N^2}$$

bei der Verarbeitungstemperatur 1,5 bis 2,5 ist.

3. Blätterteigmargarine nach Anspruch 1 oder 2, in der das Fett weniger als 1 Gew.-% $H_2E$-Fette enthält.

4. Blätterteigmargarine nach einem der Ansprüche 1 bis 3, in der der Fettgehalt mindestens 80 Gew.-% beträgt.

5. Blätterteigmargarine nach einem der Ansprüche 1 bis 4, in der das Fett aus der Gruppe ausgewählt ist, die aus Palmöl oder Palmölfraktionen, insbesondere Palmölstearin, Palmölmittelfraktion oder Mischungen davon besteht.

6. Blätterteigmargarine nach einem der Ansprüche 1 bis 5, in der die Fettphase aus 20 bis 35 Gew.-% Palmölstearin, 15 bis 25 Gew.-% Palmölmittelfraktion, 10 bis 55 Gew.-% Palmöl und 0 bis 40 Gew.-% eines flüssigen Öles besteht.

7. Blätterteigmargarine nach einem der Ansprüche 1 bis 6, in der der Festfettgehalt (UMA-1) des Fettes bei Verarbeitungstemperatur weniger als 38 beträgt.

8. Blätterteigprodukte, enthaltend als Fettkomponente die Blätterteigmargarinen nach einem der Ansprüche 1 bis 7.

9. Blätterteigprodukte nach Anspruch 8, in denen der Gewichtsindex der Blätterteigprodukte 1,0 bis 1,4 beträgt.

**Revendications**

1. Margarine pour pâte feuilletée comprenant une émulsion continue en graisse ayant une teneur en graisse d'au moins 60% en poids, dans laquelle la graisse comprend les triglycérides suivants :
$H_3$ = 3-30% en poids, calculé par rapport à la graisse, de préférence 5-25% en poids ;
$H_2U$ = 25-60% en poids, calculé par rapport à la graisse, de préférence 35-55% en poids ;
$HU_2 + U_3$ = < 65% en poids, calculé par rapport à la graisse, de préférence 30-50% en poids ;
$H_2E$, moins de 4% en poids, la graisse étant exempte de graisses lauriques,
dans lesquels :
H = acide gras saturé en $C_{16-22}$ ;
U = acide gras mono- ou polyinsaturé en $C_{18-22}$ ;
E = acide élaidique ;
l'émulsion, aux températures de travail entre 5 et 30°C, montrant une dureté C de 1200 à 2000, alors qu'en même temps, l'indice des graisses solides (UMA-1) de la graisse est tel qu'au moins à une température de travail préchoisie, $C/N^2 \geqq 1,5$.

2. Margarine pour pâte feuilletée selon la revendication 1, dans laquelle C et N de l'émulsion sont tels que $C/N^2$ à la température de travail est 1,5-2,5.

3. Margarine pour pâte feuilletée selon la revendication 1 ou 2, dans laquelle la graisse contient moins de 1% en poids de graisses $H_2E$.

4. Margarine pour pâte feuilletée selon les revendications 1 à 3, dans laquelle la teneur en graisse est d'au moins 80% en poids.

5. Margarine pour pâte feuilletée selon les revendications 1 à 4, dans laquelle on choisit la graisse parmi l'huile de palme ou les fractions d'huile de palme, en particulier la stéarine d'huile de palme, une fraction médiane d'huile de palme ou leurs mélanges.

6. Margarine pour pâte feuilletée selon les revendications 1-5, dans laquelle la phase grasse consiste en 20-35% en poids de stéarine d'huile de palme, 15-25% en poids de fraction médiane d'huile de palme, 10-55% en poids d'huile de palme et 0-40% en poids d'huile liquide.

7. Margarine pour pâte feuilletée selon les revendications 1-6, dans laquelle la teneur en graisses solides (UMA-1) de la graisse à la température de travail est inférieure à 38.

8. Pâte feuilletée contenant à titre de composant gras les margarines pour pâte feuilletée des revendications 1-7.

9. Pâte feuilletée selon la revendication 8, dans laquelle l'indice de densité de la pâte feuilletée est de 1,0-1,4.